Europäisches Patentamt

European Patent Office

Office européen des brevets

(19)

(11) Numéro de publication: **0 211 820**
**A2**

(12) **DEMANDE DE BREVET EUROPEEN**

(21) Numéro de dépôt: **86870102.0**

(22) Date de dépôt: **11.07.86**

(51) Int. Cl.⁴: **G 01 K 1/16**

(30) Priorité: **12.07.85 BE 6048113**

(43) Date de publication de la demande:
**25.02.87 Bulletin 87/9**

(84) Etats contractants désignés:
**AT DE FR GB IT LU NL SE**

(71) Demandeur: **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles(BE)**

(72) Inventeur: **Marique, Christian Allée des Abbesses, 8 B-4420 Rocourt(BE)**

(72) Inventeur: **Coessens, Christian Rue de la Clef, 60/3 B-4621 Retinne(BE)**

(74) Mandataire: **Lacasse, Lucien Emile et al, CENTRE DE RECHERCHES METALLURGIQUES Abbaye du Val-Benoît 11, rue Ernest Solvay B-4000 Liège(BE)**

(54) Procédé et dispositif de mesure en continu de la température d'un bain de métal dans un récipient métallurgique.

(57) Pour mesurer en continu la température d'un bain de métal dans un récipient métallurgique, on loge au moins une pièce métallique (1) dans le garnissage réfractaire (6) du dit récipient métallurgique, de telle façon qu'une partie de la dite pièce métallique affleure la surface intérieure du dit garnissage et se trouve en contact avec le métal en fusion contenu dans le dit récipient, on mesure la température en au moins un point (3) de la dite pièce métallique et on en déduit la température du dit bain de métal. Cette pièce peut être une barre ou un tube, de préférence en cuivre; elle est avantageusement enrobée de matériau réfractaire (2).

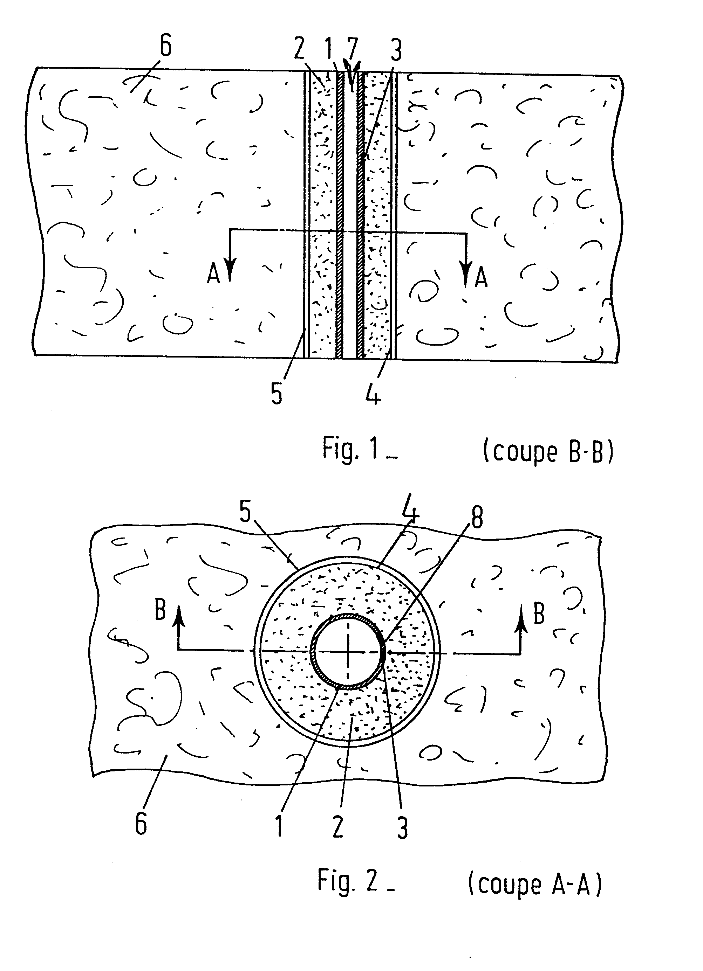

Fig. 1 _     (coupe B·B)

EP 0 211 820 A2

- 1 -

## Procédé et dispositif de mesure en continu de la température d'un bain de métal dans un récipient métallurgique.

La présente invention concerne un procédé de mesure en continu de la température d'un bain de métal dans un récipient métallurgique.

Dans la description qui suit, le procédé sera exposé en faisant référence à un bain d'acier contenu dans un convertisseur d'aciérie. Il va de soi cependant qu'il est applicable à tout autre bain de métal contenu dans un récipient métallurgique, tel qu'un bain de fonte, d'acier ou de métal non ferreux, par exemple du cuivre, contenu dans une poche ou un four de type quelconque.

On connaît l'importance que revêt la connaissance de la température d'un bain d'acier en cours d'élaboration, notamment en ce qui concerne le degré d'accomplissement des réactions de décarburation. A cet égard, il importe de pouvoir mesurer la température de façon aussi précise que possible, afin de suivre de près l'évolution de la teneur en carbone et d'obtenir avec certitude la nuance d'acier désirée. L'obtention de la nuance d'acier visée est liée à la réalisation d'une température bien précise, que l'on détermine au préalable par le calcul et que l'on s'efforce ensuite d'atteindre au cours de l'élaboration. La surveillance de l'obtention de cette température visée implique que l'on mesure, aussi précisément que possible la température effectivement atteinte, afin de déterminer le moment précis du rabattement du convertisseur.

Divers moyens ont déjà été proposés et utilisés pour mesurer la température d'un bain de métal. Parmi les techniques récentes, on peut citer notamment l'emploi de thermocouples perdus, logés dans des bombes et lancés dans le bain où ils sont détruits après la mesure, et l'emploi d'une lance auxiliaire, connue sous le nom de "sub-lance", qui plonge dans le bain de métal à travers la couche de scorie.

Ces techniques ne sont cependant pas entièrement satisfaisantes, car d'une part elles sont coûteuses et d'autre part elles fournissent des valeurs locales de la température qui ne traduisent pas nécessairement l'état thermique réel du bain.

La présente invention vise précisément à remédier aux inconvénients liés à ces techniques connues.

Le procédé qui fait l'objet de la présente invention est essentiellement caractérisé en ce que l'on loge au moins une pièce métallique dans le garnissage réfractaire du dit récipient métallurgique, de telle façon qu'une partie de la dite pièce métallique affleure la surface intérieure du dit garnissage et se trouve en contact avec le métal en fusion contenu dans le dit récipient, en ce que l'on mesure la température en au moins un point de la dite pièce métallique et en ce que l'on déduit la température du dit bain de métal.

Selon l'invention, on utilise une pièce métallique allongée, que l'on dispose suivant une direction sensiblement perpendiculaire à la surface intérieure du dit garnissage, et on mesure la température en une pluralité de points, de préférence régulièrement espacés le long de la dite pièce allongée.

En particulier la dite pièce peut être un tube, à travers lequel on insuffle un gaz neutre tel que de l'azote ou de l'argon sous pression pour empêcher la pénétration de métal en fusion dans le tube.

La présente invention porte également sur un dispositif permettant de mettre en oeuvre le procédé décrit ci-dessus.

Le dispositif qui fait l'objet de la présente invention, pour la mesure de la température d'un bain de métal dans un récipient métallurgique, est essentiellement caractérisé par une pièce métallique logée dans le garnissage réfractaire du dit récipient de telle façon qu'une partie de la dite pièce affleure la surface intérieure du dit garnissage, ainsi que par des moyens de mesure de la température en au moins un point de la dite pièce métallique.

Selon une réalisation particulièrement intéressante, le dispositif de l'invention comporte une pièce métallique allongée, telle qu'une barre ou un tube, dont une extrémité affleure la surface intérieure du garnissage, des moyens de mesure de la température fixés à la dite pièce en une pluralité de points répartis le long de la piéce, et une gaine en un matériau réfractaire entourant la dite pièce équipée des moyens précités de la mesure de la température.

Ce dispositif forme dès lors un ensemble de mesure, qui se présente sous la forme d'un barreau réfractaire dans lequel sont logés la pièce et les moyens de mesure de la température, par exemple des thermocouples.

Egalement selon l'invention, ce barreau réfractaire peut être pourvu d'une enveloppe métallique, afin d'augmenter sa résistance à l'égard de sollicitations mécaniques extérieures pouvant se produire à l'occasion de manipulations.

Toujours selon l'invention, le barreau réfractaire, pourvu ou non d'une enveloppe métallique comme exposé ci-dessus, peut être glissé dans un fourreau de guidage et de protection disposé dans le garnissage du récipient métallurgique.

Grâce à ce montage, le barreau réfractaire peut être aisément retiré de son fourreau, en cas de besoin, et remplacé par un autre barreau.

Le dispositif de l'invention va être décrit de façon détaillée en se référant au mode de réalisation préféré, illustré par les dessins annexés, dans lesquels :
la figure 1 montre une coupe longitudinale à travers un dispositif conforme à l'invention,
la figure 2 montre une coupe transversale agrandie à travers le dispositif de la figure 1, montrant la localisation des thermocouples.

Faisant d'abord référence à la figure 1, le tube métallique 1 est logé dans une gaine 2 en matériau réfractaire de haute qualité, par exemple en alumine. A intervalles de préférence réguliers le long de ce tube sont montés des thermocouples 3.

Dans la réalisation représentée, la gaine réfractaire 2 est entourée d'une enveloppe métallique 4, et l'ensemble est glissé dans un fourreau 5 disposé dans le garnissage 6 du récipient métallurgique.

Le tube est avantageusement réalisé en un métal présentant une conductibilité calorifique élevée, par exemple en cuivre; il est monté de telle façon que l'une de ses extrémités affleure la surface intérieure du garnissage réfractaire et se trouve ainsi en contact avec le bain de métal.

Comme l'indique également la figure 1, un gaz neutre 7 par exemple de l'azote ou de l'argon, peut être insufflé par le tube 1 pour empêcher la pénétration de métal liquide dans le tube.

La figure 2 illustre, en coupe transversale A-A agrandie, un exemple de localisation des thermocouples 3. Ceux-ci sont logés dans une saignée longitudinale 8 pratiquée dans la surface extérieure du tube 1.

Cette disposition s'applique aussi bien dans le cas où la pièce métallique n'est pas un tube, mais une barre pleine; elle offre l'avantage que les thermocouples ne se trouvent pas en saillie par rapport à la surface extérieure de la pièce 1.

La saignée 8 peut être de très faible profondeur, par exemple de l'ordre de 3 mm, ce qui permet d'utiliser des tubes de faible épaisseur, à savoir d'environ 4 à 5 mm.

La valeur de la température du bain de métal s'obtient en combinant les mesures fournies par les différents thermocouples 3, compte tenu de leur position et de la nature du matériau de la pièce 1.

Il est évidemment possible, dans le cadre de la présente invention, d'équiper un récipient métallurgique d'une pluralité de dispositifs conformes à l'invention, tant dans le fond que dans les parois latérales du dit récipient. Il est ainsi possible de mesurer, simultanément ou non, la température du bain en autant de points et d'obtenir une bonne image du champ thermique régnant dans le métal en fusion. La conduite du traitement s'en trouve améliorée, en particulier l'obtention de la température au rabattement d'un convertisseur d'aciérie. Il est également important de souligner que le procédé de l'invention permet, grâce à l'utilisation simultanée de plusieurs points de mesure, de détecter des hétérogénéités dans le bain, dues par exemple à la présence de matières incomplètement fondues.

Enfin, la mise en oeuvre du procédé de l'invention ne requiert pas le recours à des mécanismes complexes susceptibles de se détériorer par exemple en traversant une scorie trop dure ou en heurtant des matériaux non fondus dans le récipient métallurgique.

Revendications

1. Procédé de mesure en continu de la température d'un bain de métal dans un récipient métallurgique, caractérisé en ce que l'on loge au moins une pièce métallique dans le garnissage réfractaire du dit récipient métallurgique, de telle façon qu'une partie de la dite pièce métallique affleure la surface intérieure du dit garnissage et se trouve en contact avec le métal en fusion contenu dans le dit récipient, en ce que l'on mesure la température en au moins un point de la dite pièce métallique et en ce que l'on en déduit la température du dit bain de métal.

2. Procédé suivant la revendication 1, caractérisé en ce que l'on utilise une pièce métallique allongée, par exemple une barre ou un tube, que l'on dispose suivant une direction sensiblement perpendiculaire à la surface intérieure du dit garnissage, et en ce que l'on mesure la température en une pluralité de points, de préférence régulièrement espacés le long de la dite pièce allongée.

3. Dispositif pour la mise en oeuvre du procédé suivant l'une ou l'autre des revendications 1 et 2, caractérisé par une pièce métallique logée dans le garnissage réfractaire du dit récipient, de telle façon qu'une partie de la dite pièce affleure la surface intérieure du dit garnissage, ainsi que par des moyens de mesure de la température en au moins un point de la dite pièce métallique.

4. Dispositif suivant la revendication 3, caractérisé en ce qu'il comporte une pièce métallique allongée, telle qu'une barre ou un tube dont une extrémité affleure la surface intérieure du garnissage, des moyens de mesure de la température fixés à la dite pièce en une pluralité de points répartis le long de la pièce, et une gaine en matériau réfractaire entourant la dite pièce équipée des moyens précités de mesure de la température.

5. Dispositif suivant la revendication 4, caractérisé en ce qu'il comporte une enveloppe métallique entourant la dite gaine réfractaire.

6. Récipient métallurgique équipé d'au moins un dispositif de mesure
conforme à l'une ou l'autre des revendications 3 à 5, caractérisé
en ce qu'il comporte, dans son garnissage réfractaire, au moins un
fourreau destiné à recevoir un des dits dispositifs de mesure.

Fig. 1 _ (coupe B-B)

Fig. 2 _ (coupe A-A)